# FASCICULE DE BREVET EUROPEEN

(11) **EP 2 745 372 B1**
(45) Date de publication et mention de la délivrance du brevet: **15.01.2020**
(21) Numéro de dépôt: 12748469.9
(22) Date de dépôt: 17.08.2012
(51) Int. Cl.: H02J 1/10, H02M 3/158

(54) **CONVERTISSEUR DC/DC POUR SYSTEME HYBRIDE**
DC/DC-WANDLER FÜR EIN HYBRIDSYSTEM
DC/DC CONVERTER FOR HYBRID SYSTEM

(30) Priorité: 17.08.2011 EP 11177869
(43) Date de publication de la demande: 25.06.2014
(73) Titulaire: Belenos Clean Power Holding AG, 2502 Bienne (CH)
(72) Inventeur: TOTH, Antoine, 2800 Delémont (CH)
(74) Mandataire: Goulette, Ludivine
(86) Numéro de dépôt international: PCT/EP2012/066142
(87) Numéro de publication internationale: WO 2013/024172

(56) Documents cités:
- EP-A1- 1 705 787
- US-A- 6 154 381
- US-A1- 2002 135 338
- US-A1- 2007 024 360
- US-B1- 6 191 964
- US-B1- 6 281 666

## Description

La présente invention concerne un convertisseur DC/DC comprenant une unité de commande agencé pour contrôler des moyens de variation de tension, lesdits moyens de variation de tension comprenant une pluralité de circuits variateurs commandés chacun par un signal de commutation.

### ARRIERE PLAN TECHNOLOGIQUE

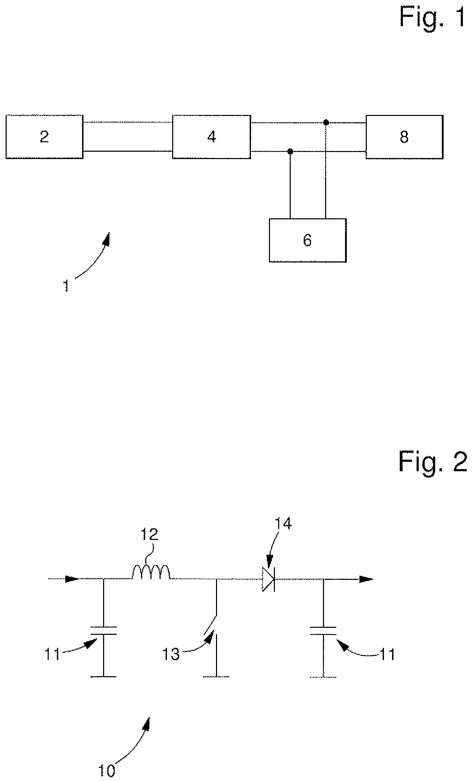

La présente invention concerne un convertisseur DC/DC utilisé dans un système hybride. Un tel système hybride 1, visible à la figure 1, comprend une pile à combustible 2 c'est-à-dire une pluralité cellules électrochimiques montées en série. Cette pile à combustible 2 est alimentée par un combustible réducteur tel que de l'hydrogène et par un oxydant tel que de l'oxygène. La réaction du combustible réducteur et de l'oxydant entraîne la génération de tension de pile à combustible. Les gaz issues de la réaction du combustible réducteur et de l'oxydant peuvent être évacués via des circuits de recirculations équipés de pompes de recirculation. Le système hybride 1 comprend également des moyens de stockage d'énergie 6 tel qu'une ou plusieurs batteries. Dans le reste de la description, on considérera que ces moyens de stockage d'énergie électrique sont une batterie 6 mais rien n'empêche d'avoir plusieurs batteries. Cette batterie 6 fournit une tension de batterie et est branchée en parallèle de la pile à combustible 2 de sorte que la pile à combustible 2 et la batterie 6 soient toutes les deux connectées à une charge variable 8. Cette charge variable 8 peut être, par exemple, un moteur de voiture.

Ce système hybride 1 comprend donc un convertisseur DC/DC 4 appelée aussi système élévateur et/ou abaisseur, comprenant deux entrées et deux sorties. Aux deux entrées du convertisseur DC/DC 4 sont connectées les sorties de la pile à combustible 2, cela signifie donc que la tension fournie par la pile à combustible 2 entre dans le convertisseur DC/DC 4. Aux deux sorties du convertisseur DC/DC 4 sont connectés les points de connexion de la charge variable 8 et de la batterie 6. Le convertisseur DC/DC 4 est également agencé pour contrôler le système hybride 1 car le convertisseur DC/DC 4 est capable d'adapter le niveau de tension et de courant de la pile à combustible 2 mais aussi celui de la batterie 6. De même le convertisseur DC/DC peut réguler la puissance délivrée par la pile à combustible 2.

En effet, le rôle du convertisseur DC/DC 4 est de piloter le système hybride 1 de sorte que la batterie 6 et la pile à combustible 2 fonctionne ensemble pour alimenter la charge 8. Le convertisseur DC/DC a également pout but de répartir la puissance fournie par la pile à combustible entre la charge qui est le moteur électrique dans le cadre d'une application automobile et la batterie, et de maintenir le niveau de charge de la batterie à un niveau déterminé. Ce pilotage du système hybride 1 est bien entendu soumis à des contraintes qui sont les tensions et courants limites de la pile à combustible 2, les tensions et courants limites de la batterie 6, les états de charge limites de la batterie 6, les températures limites à ne pas dépasser et autres.

Il est connu qu'un tel convertisseur DC/DC 4 visible à la figure 2 comprenne au moins un circuit variateur 10 comprenant une entrée donnant sur une première capacité de filtrage 11 reliée en parallèle à la masse et sur une bobine 12 connectée en série avec une diode 14. Au point de connexion entre la bobine 12 et la diode 14, un moyen de commutation 13 est branché en parallèle et connectée à la masse. La sortie de la diode 14 est connectée à la sortie au niveau de laquelle une seconde capacité de filtrage 11 reliée en parallèle à la masse est agencée. Les moyens de commutation 13 qui peuvent être par exemple un transistor sont commandés en fréquence par un signal de commande.

Un inconvénient de ce convertisseur DC/DC est qu'il est encombrant car l'encombrement convertisseur DC/DC est proportionnel à la puissance de ce dernier. En effet, la puissance d'un tel convertisseur DC/DC est liée à l'impédance de ces composants. Or, l'impédance d'une bobine ou d'un condensateur est liée à la fréquence et à la valeur de ladite bobine et du condensateur. A fréquence définie, il faut augmenter la valeur de la capacité du condensateur et la valeur de l'inductance de la bobine pour augmenter l'impédance. Cela entraîne alors une augmentation de la taille des composants et donc une augmentation de la taille du convertisseur DC/DC, sans parler d'une augmentation des coûts.

Le document US 6281 666 B1 décrit un convertisseur DC/DC comprenant une pluralité de circuits variateurs, ses derniers étant commandés de façon déphasés les uns par rapport aux autres. Le document US 6 154 381 A décrit un convertisseur DC/DC comprenant une pluralité de circuits variateurs. Chaque circuit variateur est réalisé pour fournir une puissance définie de sorte que la convertisseur DC/DC est configuré pour choisir le circuit variateur selon la puissance désirée. Le document US 2007/0024360 A1 décrit une alimentation comprenant une pluralité de circuits variateurs. L'alimentation est gérée de sorte que ces circuits variateurs sont commandée en modulation de largeur d'impulsion.

### RESUME DE L'INVENTION

La présente invention cherche donc à fournir un convertisseur DC/DC qui pallie les inconvénients de l'art antérieur c'est-à-dire en fournissant un convertisseur DC/DC qui est plus compact, moins couteux tout en offrant un rendement au moins équivalent.

A cet effet, la présente invention concerne un convertisseur DC/DC comprenant une unité de commande agencé pour contrôler des moyens de variation de tension, lesdits moyens de variation de tension comprenant une pluralité de circuits variateurs commandés chacun par un signal de commutation, caractérisé en ce que lesdits circuits variateurs étant regroupés en plusieurs modules commandés chacun par un signal de commande envoyé par l'unité de commande et en ce que les signaux de commutation des circuits variateurs d'un même module sont déphasés les uns par rapport aux autres et en ce que les signaux de commande des modules sont également déphasés les uns par rapport aux autres.

Des modes de réalisation avantageux du convertisseur selon la présente invention font l'objet de revendications dépendantes.

Dans un premier mode de réalisation avantageux, les signaux de commutation des circuits variateurs d'un même module sont déphasés de T/4 les uns par rapport aux autres.

Dans un second mode de réalisation avantageux, les signaux de commande des modules sont déphasés de T/16 les uns par rapport aux autres.

Dans un autre mode de réalisation avantageux, chaque circuit variateur comprend une entrée donnant sur une première capacité de filtrage reliée en parallèle à la masse et en série sur une bobine connectée elle-même en série avec une diode, un moyen de commutation étant branché, au point de connexion entre la bobine et la diode, en parallèle et connecté à la masse, la sortie de la diode étant connectée à la sortie au niveau de laquelle une seconde capacité de filtrage reliée en parallèle à la masse est agencée.

L'invention a également pour objet un système hybride comprenant une pile à combustible reliée à une charge variable via un convertisseur DC/DC, ledit système hybride comprenant en outre des moyens de stockage d'énergie connectés au convertisseur DC/DC et à la charge variable, caractérisé en ce que le convertisseur DC/DC est le convertisseur DC/DC selon l'une des revendications précédentes.

### BREVE DESCRIPTION DES FIGURES

Les buts, avantages et caractéristiques du convertisseur selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique un système hybride connu;
- la figure 2 représente de manière schématique un circuit variateur connu; et
- la figure 3 représente de manière schématique le convertisseur DC/DC selon l'invention.

### DESCRIPTION DETAILLEE

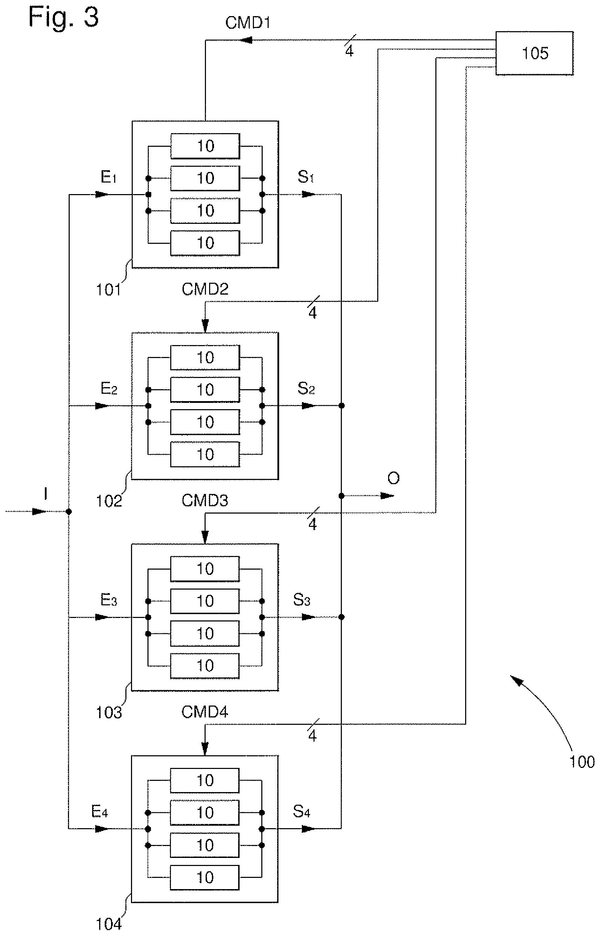

Le convertisseur DC/DC 100 selon la figure 3 comprend une unité de commande 105 agencée pour contrôler des moyens de variation de tension 106. Ces moyens 106 comprennent une entrée principale (I) et une sortie principale (O). Dans l'exemple de la figure 3 qui sera utilisée pour la suite de la description, le convertisseur DC/DC 100 est un convertisseur DC/DC élévateur.

Ces moyens 106 comprennent plusieurs circuits élévateurs 10 tel que décrit auparavant. On comprend alors qu'un tel circuit variateur 10 comprend une entrée donnant sur une première capacité de filtrage 11 reliée en parallèle à la masse et en série sur une bobine 12 connectée elle-même en série avec une diode 14. Au point de connexion entre la bobine 12 et la diode 14, un moyen de commutation 13 est branché en parallèle et connecté à la masse. La sortie de la diode 14 est connectée à la sortie au niveau de laquelle une seconde capacité de filtrage 11 reliée en parallèle à la masse est agencée. Les moyens de commutation 13 sont un transistor MosFET ou bipolaire ou IGBT commandé en fréquence par l'unité de commande 105 et par un signal de commutation.

Avantageusement selon l'invention, les circuits élévateurs 10 sont regroupés sous forme d'au moins un module 101, 102, 103, 104. De façon particulière, les moyens de variation de tension 106 comprennent quatre modules 101, 102, 103, 104 en parallèle comprenant chacun quatre circuits élévateurs 10 montés en parallèle. Chaque module 101, 102, 103, 104 comprend une entrée E1, E2, E3, E4 et une sortie S1, S2, S3, S4, les entrées E1, E2, E3, E4 étant reliées à l'entrée principale (I) et les sorties S1, S2, S3, S4 étant reliées à la sortie principale (O). Chaque module 101, 102, 103, 104 est commandé par l'unité de commande 105 via des signaux de commande CMD1, CMD2, CMD3, CMD4.

Cette configuration permet de commander les moyens de variation de tension 106 de façon déphasée.

Premièrement, les circuits variateurs 10 de chaque module 101, 102, 103, 104 sont avantageusement commandés en fréquence de sorte à être déphasés les uns par rapport aux autres. On entend par là que les circuits variateurs 10 d'un module 101, 102, 103, 104 reçoivent tous en même temps un signal de commutation agissant sur les moyens de commutation 13 de chaque circuit 10 et venant de l'unité de commande 105 mais que les signaux de commande sont déphasés les uns par rapport aux autres : Cela permet aux moyens de commutation 13 des circuits variateurs 10 de commuter à des moments différents. Dans le cas présent où chaque module 101, 102, 103, 104 comprend quatre circuits élévateurs 10, les signaux de commande sont déphasés de T/4 l'un par rapport à l'autre. Ce déphasage permet de virtuellement commuter quatre fois sur une seule période des signaux de commutation. La fréquence qui est ainsi vue par les composants comme les condensateurs 11 est ainsi multipliée par quatre.

En second lieu, le fait d'avoir des modules 101, 102, 103, 104 oblige à sélectionner, via les signaux de commande CMD1, CMD2, CMD3, CMD4, chaque module 101, 102, 103, 104 les uns après les autres pour qu'un seul module 101, 102, 103, 104 soit actif à un instant donné. L'invention suggère avantageusement de déphaser également les signaux de commande CMD1, CMD2, CMD3, CMD4 entre eux. Dans le cas avec quatre modules 101, 102, 103, 104, le déphasage est de T/16 l'un par rapport à l'autre. Cela permet de multiplier encore la fréquence virtuelle que voient les condensateurs 11.

En effet, le signal de commande CMD1 est envoyé au premier module 101 de sorte que la commutation des moyens de commutation 13 des circuits 10 dudit module 101 commence. Puis, avec un déphasage de T/16 par rapport au signal de commande CMD1, le signal de commande CMD2 est envoyé au second module 102 de sorte que la commutation des moyens de commutation 13 des circuits 10 dudit module 102 commence. Le signal de commande CMD3 est envoyé au troisième module 103 avec un déphasage de T/16 par rapport au signal de commande CMD2 de sorte que la commutation des moyens de commutation 13 des circuits 10 dudit module 103 commence. Enfin, le signal de commande CMD4 est envoyé au quatrième module 104 avec un déphasage de T/16 par rapport au signal de commande CMD3.

Ainsi, en un quart de période, les signaux de commande CMD1, CMD2, CMD3, CMD4 ont tous été envoyés aux modules 101, 102, 103, 104. Comme la commutation des moyens de commutation 13 des circuits 10 de chaque module est également déphasée, la fréquence que voient les condensateurs 11 est multipliée. Dans le cas présent avec quatre modules 101, 102, 103, 104 ayant chacun quatre circuits variateurs 10, la fréquence virtuelle que voient les condensateurs 11 est multipliée par 16. Par exemple, si les signaux envoyés par l'unité de commande 105 sont à une fréquence de 100kHz, la fréquence virtuelle est de 1.6 GHz. Bien entendu, la fréquence de fonctionnement du convertisseur DC/DC 100 dépendra de la technologie utilisée pour ses composants.

En conséquence, avec une fréquence qui augmente, la valeur des condensateurs 11 peut être diminuée. Or, comme la taille de ces composants est proportionnelle à leur valeur, des composants avec une plus faible valeur et prenant moins de place en surface permettent de réduire la taille du convertisseur DC/DC 100. Le gain est suffisamment important pour que l'augmentation du nombre de circuits variateurs 10 ne soit pas gênante.

On comprendra que diverses modifications et / ou améliorations évidentes pour l'homme du métier peuvent être apportées aux différentes modes de réalisation de l'invention décrits dans la présente description sans sortir du cadre de l'invention.

## Revendications

1. Convertisseur DC/DC (100) comprenant une unité de commande (105) agencé pour contrôler des moyens de variation de tension, lesdits moyens de variation de tension comprenant une pluralité de circuits variateurs (10) commandés chacun par un signal de commutation, **caractérisé en ce que** lesdits circuits variateurs (10) étant regroupés en plusieurs modules (101, 102, 103, 104) commandés chacun par un signal de commande (CMD1, CMD2, CMD3, CMD4) envoyé par l'unité de commande (105) et **en ce que** les signaux de commutation des circuits variateurs (10) d'un même module sont déphasés les uns par rapport aux autres et **en ce que** les signaux de commande (CMD1, CMD2, CMD3, CMD4) des modules (101, 102, 103, 104) sont également déphasés les uns par rapport aux autres.

2. Convertisseur DC/DC (100) selon la revendication 1, **caractérisé en ce que** les signaux de commutation des circuits variateurs (10) d'un même module sont déphasés de T/4 les uns par rapport aux autres.

3. Convertisseur DC/DC (100) selon les revendications 1 ou 2, **caractérisé en ce que** les signaux de commande (CMD1, CMD2, CMD3, CMD4) des modules (101, 102, 103, 104) sont déphasés de T/16 les uns par rapport aux autres.

4. Convertisseur DC/DC (100) selon l'une des revendications précédentes, **caractérisé en ce que** chaque circuit variateur (10) comprend une entrée donnant sur une première capacité de filtrage (11) reliée en parallèle à la masse et en série sur une bobine (12) connectée elle-même en série avec une diode (14), un moyen de commutation (13) étant branché, au point de connexion entre la bobine et la diode, en parallèle et connecté à la masse, la sortie de la diode étant connectée à la sortie au niveau de laquelle une seconde capacité de filtrage reliée en parallèle à la masse est agencée.

5. Système hybride comprenant une pile à combustible (2) reliée à une charge variable (8) via un convertisseur DC/DC, ledit système hybride (1) comprenant en outre des moyens de stockage d'énergie (6) connectés au convertisseur DC/DC et à la charge variable (8), **caractérisé en ce que** le convertisseur DC/DC est le convertisseur DC/DC (100) selon l'une des revendications précédentes.

## Patentansprüche

1. DC-DC-Wandler (100) mit einer Steuereinheit (105) zum Steuern von Spannungsveränderungsmitteln, wobei die Spannungsänderungsmittel mehrere Verstellschaltungen (10) umfassen, die jeweils durch ein Schaltsignal gesteuert werden, **dadurch gekennzeichnet, dass** die Verstellschaltungen (10) in mehrere Module (101, 102, 103, 104) gruppiert sind, die jeweils durch ein von der Steuereinheit (105) gesendetes Steuersignal (CMD1, CMD2, CMD3, CMD4) gesteuert werden, und dass die Schaltsignale der Verstellschaltungen (10) desselben Moduls untereinander phasenverschoben sind, und dass die Steuersignale (CMD1, CMD2, CMD3, CMD4) der Module (101, 102, 103, 104) ebenfalls untereinander phasenverschoben sind.

2. DC-DC-Wandler (100) nach Anspruch 1, **dadurch gekennzeichnet, dass** die Schaltsignale der Verstellschaltungen (10) desselben Moduls um T/4 untereinander phasenverschoben sind.

3. DC-DC-Wandler (100) nach den Ansprüchen 1 oder 2, **dadurch gekennzeichnet, dass** die Steuersignale (CMD1, CMD2, CMD3, CMD4) der Module (101, 102, 103, 104) um T/16 untereinander phasenverschoben sind.

4. DC-DC-Wandler (100) nach einem der vorhergehenden Ansprüche, **dadurch gekennzeichnet, dass** jede Verstellschaltung (10) einen Eingang umfasst, der zu einer ersten Filterkapazität (11) führt, die parallel zur Masse und auf einer Spule (12) in Reihe geschaltet ist, die selbst mit einer Diode (14) in Reihe angeschlossen ist, wobei eine Schalteinrichtung (13) an der Verbindungsstelle zwischen der Spule und der Diode parallel geschaltet und mit der Masse verbunden ist, wobei der Diodenausgang mit dem Ausgang verbunden ist, in Bezug auf den eine zweite parallel zur Masse angeschlossene Filterkapazität angeordnet ist.

5. Hybridsystem umfassend eine Brennstoffzelle (2), die über einen DC-DC-Wandler mit einer variablen Last (8) verbunden ist, wobei das Hybridsystem (1) ferner Energiespeichermittel (6) umfasst, die mit dem DC-DC-Wandler und mit der variablen Last (8) verbunden sind, **dadurch gekennzeichnet, dass** der DC-DC-Wandler der DC-DC-Wandler (100) nach einem der vorhergehenden Ansprüche ist.

## Claims

1. DC/DC converter (100) including a control unit (105) arranged to control a voltage variation means, said voltage variation means including a plurality of variable voltage regulator circuits (10) each controlled by a switching signal, **characterized in that** said variable voltage regulator circuits (10) are grouped together in several modules (101, 102, 103, 104) each controlled by a control signal (CMD1, CMD2, CMD3, CMD4) sent by the control unit (105) and **in that** the switching signals of the variable voltage regulator circuits (10) of the same module are phase shifted in relation to each other and **in that** the control signals (CMD1, CMD2, CMD3, CMD4) of the modules (101, 102, 103, 104) are also phase shifted in relation to each other.

2. DC/DC converter (100) according to claim 1, **characterized in that** the switching signals of the variable voltage regulator circuits (10) of the same module are phase shifted by T/4 in relation to each other.

3. DC/DC converter (100) according to claims 1 or 2, **characterized in that** the control signals (CMD1, CMD2, CMD3, CMD4) of the modules (101, 102, 103, 104) are phase shifted by T/16 in relation to each other.

4. DC/DC converter (100) according to any of the preceding claims, **characterized in that** each variable voltage regulator circuit (10) includes an input opening on a first filtering capacitor (11), connected in parallel to earth and in series across a coil (12), which is in turn series-connected with a diode (14), a switching means (13) being connected, at the connection point between the coil and the diode, in parallel and connected to earth, the diode output being connected to the output where there is arranged a second filtering capacitor connected in parallel to earth.

5. Hybrid system including a fuel cell stack (2) connected to a variable load (8) via a DC/DC converter, said hybrid system (1) further including an energy storage means (6) connected to the DC/DC converter and to the variable load (8), **characterized in that** the DC/DC converter is the DC/DC converter (100) according to any of the preceding claims.
